# EUROPEAN PATENT SPECIFICATION

(11) **EP 3 218 310 B1**
(45) Date of publication and mention of the grant of the patent: **10.04.2019**
(21) Application number: 15798572.2
(22) Date of filing: 10.11.2015
(51) Int. Cl.: C02F 1/02, B01D 3/00, C02F 1/18

(54) **SYSTEM AND METHOD FOR PASTEURIZING A LIQUID**
SYSTEM UND VERFAHREN ZUR PASTEURISIERUNG EINER FLÜSSIGKEIT
SYSTÈME ET PROCÉDÉ DE PASTEURISATION D'UN LIQUIDE

(30) Priority: 10.11.2014 CH 17392014
(43) Date of publication of application: 20.09.2017
(73) Proprietor: Ren4water Impact, 1006 Lausanne (CH)
(72) Inventor: DI NUBILA, Marco, CH-1006 Lausanne (CH); MIRACOLA, Giuseppe, CH-1473 Châtillon (CH); GORNI, Marco, I-42045 Luzzara (RE) (IT); COMETTO, Fabrizio, F-78600 Le Mesnil-le-Roi (FR); DI NUBILA, Luca Marino, San Marino 47890 (SM)
(74) Representative: P&TS SA (AG, Ltd.)
(86) International application number: PCT/IB2015/058659
(87) International publication number: WO 2016/075614

(56) References cited:
- WO-A1-2013/107469
- DE-A1-102004 033 409
- GB-A- 2 447 411
- US-A- 4 316 774

## Description

### Field of the invention

The present invention concerns a system, for example a portable system, and method for pasteurizing a liquid.

In particular, the present invention concerns a system and method for pasteurizing water, particularly at home or at small operation units.

### Description of related art

Almost one billion people still lack access to safe drinking water with fatal consequences of millions dying per year, mainly children, due to water-born diseases. According to World Health Organization, a widespread household water treatment would make an impactful difference. As matter of fact, existing technologies do not solve this problem.

Portable water treatment systems are known from the prior art to provide potable water at remote locations. The patent application GB 2 447 411 A for example discloses a portable device for the condensation of water moisture from the air. However, there is no further treatment of the water to prevent microbial contamination.

Among the known disinfection technologies boiling water is one of the easiest and most effective ways to obtain safe water - as it effectively destroys bacteria, protozoa and viral causes of organic contamination of water. Unfortunately, traditional boiling water methods require high energy-consumption either through electric resistant heating or via combustion.

Boiling water only through electric resistant heating is not efficient and requires an electric power that is hardly available without an electric distribution grid, as it is often the case at households in geographic areas without access to safe drinking water.

Boling water via combustion - highly practiced in developing countries, requires high fossil-fuel consumption with negative socioeconomic and health costs (long hours gathering firewood, fossil-fuel expenses and intoxication) and heavy environmental consequences (CO2 emission, deforestation).

Moreover, raising the water temperature to the boiling point is not necessary and requires an excess of energy, while reaching the pasteurization temperature of 70°C for a limited contact time (few seconds to minutes) is sufficient (according to scientific literature) to ensure the effectiveness of treatment against organic contamination.

The document WO2009021090 describes a method and an apparatus that purifies drinking water by boiling water and immediately cooling it. The thermodynamic cycle is complex and needs two condensers. The apparatus works by using CO2 as refrigerant. The power necessary for the working of the apparatus is higher than 1500 W. The apparatus works by exploiting the energy of an electrical grid.

The document WO2011145034 describes a system comprising a photovoltaic panel connected to an electric distribution grid and generating an electric power higher than 1 kW, e.g. 10 kW to operate a heat pump that stocks renewable energy by heating water in a storage tank.

There is an important need for a method and system that can pasteurize water (instead of boiling or before boiling) without requiring combustion or electric grid connection.

### Brief summary of the invention

According to the invention, this aim is achieved by means of a system and a method according to the pending claims.

In particular the system for pasteurizing a liquid in a liquid storage tank according to the invention comprises:
- an off-grid renewable energy source arranged to generate an electric power signal having a power equal or inferior to 500 W, the off-grid renewable energy source being portable,
- the liquid storage tank being portable, being arranged to contain a volume of liquid inferior to 50 I, for example inferior to 30 I, and comprising a handle for facilitating the transport of the liquid storage tank, for example after the pasteurization of said liquid,
- a first container comprising a heat pump, the heat pump being arranged to be completely powered by said off-grid renewable energy source,
- the heat pump comprising a condenser near to or directly in contact with a base of the tank, so as to pasteurize the liquid contained in the tank.

The system according to the invention aims to pasteurize water by coupling off-grid renewable sources (e.g. a photovoltaic panel) and heat pump at a small power scale, e.g. less than 500 W. Advantageously, it is completely powered by off-grid renewable technologies. In a preferred embodiment, the system is portable, i.e. it can be transported and/or moved by one person.

In one preferred embodiment, the system according to the invention comprises a photovoltaic panel, a control unit which can comprise a charge controller (and possibly an inverter) and a heat pump to operate a thermodynamic cycle that transfers heat from the cold source of external air to the hot source of water storage that increases its temperature, in particular to achieve the pasteurization of the liquid. An electric resistant heating element can be added and immersed in the liquid of the tank in order to support the heating up process.

The heat pump includes the necessary elements of a refrigerant fluid circuit, an evaporator with or without fan, a compressor, a heat-exchanger (or condenser) which can be embodied in the water tank, e.g. in its bottom floor, and an expansion valve. A water tank hermetic cover or cap and a human-machine-interface (HMI) can complete the system.

The condenser can be made of a refrigerant conduit or pipe of a heat conductive material, e.g. copper or aluminium. The condenser can be immersed in the liquid contained in the tank. In this case, the heat exchange will be more efficient. In another embodiment, the condenser is embodied in the liquid tank, in particular integrated in its bottom or base. In this case, there is only a partial liquid contact on one surface of the condenser.

However it must be understood that the present invention is not limited to the position of the condenser immersed in the liquid contained in the tank or integrated in the tank, e.g. embodied in its bottom: in fact, the condenser can be placed also outside the tank, as long as it is in contact with the tank, i.e. it enters into contact with the tank. In one preferred embodiment, the condenser is in external contact with an external surface of the liquid tank, thereby the condenser is protected from any contact with the liquid inside the tank. Moreover, in such a case, the tank and the condenser can be easily separated.

In the context of the present invention, an inner surface of the tank is a surface that directly enters into contact with the liquid contained in the tank. On the other hand, an outer surface of the tank is a surface that does not enter into contact with this liquid.

In one preferred embodiment, the contact between the inner or outer surface of the tank and the condenser is a direct contact, i.e. the condenser directly touches the surface of the tank. In one preferred embodiment, the tank is made of heat conductive material, e.g. aluminium, and the whole outer surface of the tank is covered by thermal insulation material of a receiving container. In the case of the contact between the outer surface of the tank and the condenser, both the whole outer surface of the tank and the condenser that touches the outer surface are covered by thermal insulation material of a receiving container.

The current status of technologies allows photovoltaic efficiency to range between 15% and 20%, while air-to-water heat pump can heat up water with a coefficient of performance ranging from 2 to 4 depending on operating conditions (mainly air temperature and humidity). Therefore, the overall efficiency of the technology system becomes comparable to the average efficiency when heating up water with a thermal solar collector but with the invaluable advantage to have an electric signal available to operate an automated control. This advantage allows to precisely control system performances under variable ambient conditions and raise temperature at least up to pasteurization point in the shortest time period (e.g. 10 I of water from 20 °C to 70 °C in approximately 2 hours). An electric resistant heating element can be added and e.g. immersed in the liquid of the tank, in order to support the critical stages of the heating up process and the maintaining stage of the temperature of the liquid.

An electric storage can be embedded in the control unit to ensure the heat pump can complete a pasteurization cycle without interruptions and deliver safe water without risk of incomplete treatment.

In one preferred embodiment, the control unit manages the acquisition of the DC (or AC) electric power signal from the charge controller (and inverter) and the transfer of this electric power signal selectively to the embedded electric storage and to the heat pump, in order to make the system ready to start up a pasteurization cycle on user demand, and complete it without interruptions.

In another embodiment, as discussed, the heat exchanger (or condenser) is embedded in the bottom floor of the water tank, ensuring that pasteurization temperature is first achieved at the bottom of the water storage where a convection flow is initiated to mix up water at upper layers to uniformly achieve the pasteurization temperature across the water storage.

The advantage to use thermodynamics to pasteurize water is that the thermodynamic circuit and cycle can be further elaborated to obtain a subsequent cooling after pasteurization, a process that makes output water available for cold consumption, while heat is transferred to pre-heat a second water storage before starting a pasteurization cycle.

The present invention concerns also a method for pasteurizing a liquid contained in a liquid storage tank, the method comprising
- generate an electric power signal having a power equal or inferior to 500 W by using an off-grid renewable energy source, the off-grid renewable energy source being portable,
- completely power a heat pump by using said power signal, the heat pump being in a first container and comprising a condenser near to or directly in contact with a base of the liquid storage tank, so as to modify the temperature of the liquid contained in the tank and pasteurize said liquid,
- transport the liquid storage tank by using a handle of the liquid storage tank.

According to an independent aspect of the invention, the present invention concerns a system for modifying the temperature of a liquid, comprising
- an off-grid renewable energy source, arranged to generate an electric power signal having a power equal or inferior to 500 W
- a heat pump, arranged to be completely powered by said off-grid renewable energy source and to modify the temperature of said liquid.

According to one embodiment, the system comprises a liquid storage tank connected to said heat pump, said liquid storage tank being arranged for containing said liquid.

According to one embodiment, the system comprises a control unit arranged to connect the off-grid renewable energy source with the heat pump by transferring electric power from said off-grid renewable energy source to said heat pump.

According to one embodiment, the off-grid renewable energy source comprises at least one photovoltaic panel.

According to one embodiment, the photovoltaic panel is a flexible foldable and/or rolling and/or swivelling photovoltaic panel.

According to one embodiment, the liquid storage tank has a substantially cylindrical or a substantially prismatic shape, and comprises a base.

According to one embodiment, the heat pump comprises a condenser, said condenser comprising a refrigerant conduit being arranged to be bent so that the area of the bent refrigerant conduit is substantially equal or inferior to the area of said base.

According to one embodiment, the refrigerant conduit being arranged to be bent so as to form a spiral.

According to one embodiment, the system comprises a container for receiving said liquid storage tank.

According to one embodiment, the condenser is in contact with said base and/or with said container.

According to one embodiment, the system comprises a hermetic cap for hermetically closing said liquid storage tank.

According to one embodiment, the system is arranged to heat the liquid of the liquid storage tank.

According to one embodiment, the system is arranged to pasteurize the liquid of the liquid storage tank.

According to one embodiment, said liquid is water.

According to one embodiment, the heat pump is arranged to heat said water to a temperature of at least 70 °C.

According to one embodiment, the heat pump is arranged to hold the temperature of at least 70 °C for a time less than 5 minutes.

According to one embodiment, the control unit (2) comprises an energy storage unit, for example a super-capacity, arranged so as to store at least the energy necessary for heating said water to a temperature of at least 70 °C.

According to one embodiment, the system is arranged to cool the liquid of the liquid storage tank.

According to one embodiment, the liquid storage tank is a first liquid storage tank, the system comprising a second liquid storage tank, the system being arranged to transfer the heat generated by cooling the liquid of the first liquid storage tank to the second liquid storage tank so as to pre-heating the liquid of said second liquid storage tank.

According to one embodiment, the control unit comprises an inverter generating an AC current signal, the heat pump being arranged to work with said AC current signal.

According to one embodiment, the off-grid renewable energy source is arranged to power the control unit.

According to one embodiment, the control unit is arranged to perform at least one of the following tasks:
- receive the signal power from the off-grid renewable energy source and transmit at least a part of it to the heat pump circuit
- receive the signal power from the off-grid renewable energy source and charge the energy storage unit
- manage the energy stored in the energy storage unit
- manage a machine-human interface
- manage the signals from temperature sensors placed on the liquid storage tank and/or at the evaporator and/or on the off-grid renewable energy source
- measure the time the temperature of the liquid in the liquid storage tank remains above the pasteurization point
- stop the working of the system when the pasteurization cycle is completed
- stop the working of the system in case of over-heat and/or error.

According to one embodiment, the off-grid renewable energy source is portable, and/or the liquid storage tank is portable.

According to one embodiment, the liquid storage tank is arranged to contain a volume of liquid inferior to 50 I, for example inferior to 30 I.

According to another independent aspect of the invention, the present invention concerns also a method for modifying the temperature of a liquid, comprising
- generate an electric power signal having a power equal or inferior to 500 W by using an off-grid renewable energy source,
- completely power a heat pump by using said power signal.

### Brief Description of the Drawings

The invention will be better understood with the aid of the description of an embodiment given by way of example and illustrated by the figures, in which:
Fig. 1 shows a schematic view of an embodiment of a system according to the invention.
Fig. 2 shows a sectional view of a liquid storage tank and of the condenser of the system according to one embodiment of the invention.
Fig. 3 shows a sectional view of a container receiving the condenser and a liquid storage tank of the system according to one embodiment of the invention.
Fig. 4 shows a view of a preferred embodiment of the condenser according to the invention.
Fig. 5 shows a perspective view of another embodiment of a system according to the invention.
Fig. 6 shows a schematic view of another embodiment of a system according to the invention.
Fig. 7 shows a perspective view of an embodiment of the condenser according to the invention, lying in a thermal insulation plate.
Fig. 8 shows a perspective view of an embodiment of the liquid storage tank of the system according to one embodiment of the invention and of the condenser of Fig. 7.
Fig. 9 shows a perspective view of some elements of the system according to one embodiment of the invention.
Fig. 10 shows a perspective view of the system according to one embodiment of the invention.

### Detailed Description of possible embodiments of the Invention

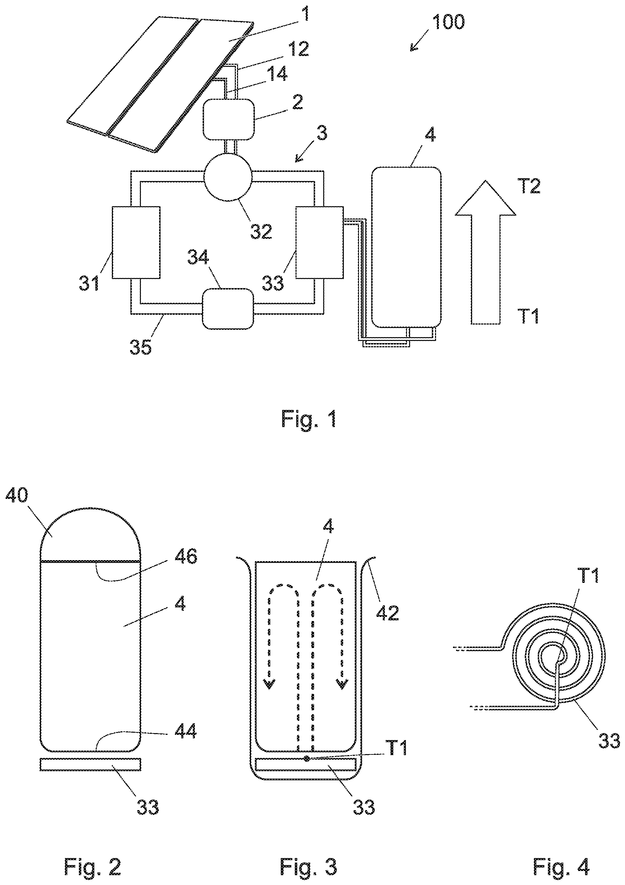

Fig. 1 shows a schematic view of one embodiment of a system 100 for modifying the temperature of a liquid according to the invention, in particular to achieve the pasteurization of the liquid. In the illustrated embodiment, the liquid is contained in a liquid storage tank 4.

The illustrated system comprises:
- an off-grid renewable energy source 1, arranged to generate an electric power signal having a power equal or inferior to 500 W, the off-grid renewable energy source 1 being portable,
- a heat pump 3, arranged to be powered by this off-grid renewable energy source 1 and to modify the temperature of the liquid, in particular to achieve the pasteurization of the liquid.

In the context of the present invention, the expression "off-grid energy source" means an energy source not connected to a main or national electrical grid (i.e. "off-grid"). In other words, an off-grid energy source is electrically autonomous, as it does not depend on a connection to an external grid.

In the context of the present invention, the expression "renewable energy source" means an energy source exploiting renewable resources in nature such as (but not limited to) sunlight, wind, rain, tides, waves, geothermal heat, etc.

In the context of the present invention, the expression "off-grid renewable energy source" means then a renewable energy source not connected to a main or national electrical grid. Advantageously, the system according to the invention is *completely* powered by an off-grid renewable energy source and the system can be portable.

In the embodiment of Fig. 1, the off-grid renewable energy source 1 comprises a photovoltaic panel. However, this embodiment is not limitative, as other off-grid renewable energy sources 1 could be used instead, for example and in a non-limitative way a wind turbine.

The system illustrated in Fig. 1 comprises also a control device or control unit 2, arranged to connect the off-grid renewable energy source 1 with the heat pump 3. The heat pump 3 provides heat energy from a source of heat (e.g. the ambient air) to the liquid storage tank 4, by exploiting the physical properties of the refrigerant, i.e. a volatile evaporating and condensing fluid, circulating in the pipes or tubes or conduits 35. An electric resistant heating element (not illustrated) can be added and e.g. immersed in the liquid of the tank 4, in order to support the heating up process. This electric resistant heating element is powered by the energy from the off-grid renewable energy source 1.

The heat pump 3 comprises an evaporator 31, a compressor 32, a condenser 33 and an expansion valve 34. In one embodiment the heat pump 3 is a heat pump using a known refrigerant, e.g. and in a non-limiting way a R134a heat pump or a R600a (isobutane) heat pump or R123 heat pump.

Advantageously, the system according to the invention can be manufactured at low cost, as all components of the heat pump, except the condenser, can be available in the market as components for high-volumes industries, e.g. automotive, air conditioning etc. Therefore, those components are available at low cost.

The off-grid renewable energy source 1 is arranged to generate an electric power signal having a power equal or inferior to 500 W. In a preferred embodiment, the power signal has a power equal or inferior to 300 W, e.g. 150 W or less.

This power signal activates the control unit 2 and provides the power necessary for the working of compressor 32 of the heat pump 3. If the evaporator 31 comprises also a fan, so as to raise the efficiency of the heat pump 3, the electric power signal generates the power necessary for the working of the fan too.

Therefore, the heat pump 3 is configured to work with this "small" electric power signal, i.e. with a power signal having a power equal or inferior to 500 W. If an electric resistant heating element is added and immersed in the liquid of the tank in order to support the critical stages of the heating up process and the maintaining stage of the temperature of the liquid, the electric resistant heating element is operated by the control unit 2 with a power signal having a power equal or inferior to 500 W.

The applicant was confronted to the problem to raise the temperature of the liquid, e.g. the water, in the tank 4 so as to pasteurize it in an efficient way and by using only the energy from off-grid renewable energy source 1. In order to achieve those goals, he had to raise the efficiency of the heat-pump, by imaging a condenser 33 having a particular position and/or shape, as will be discussed.

Moreover, it must be noted that, although at the time of the invention compressors working with power less than 500 W were probably known, their use for pasteurising a liquid (e.g. water) was not indicated nor suggested. The applicant discovered that this kind of low-power compressor can be used for pasteurising a liquid, e.g. by controlling the thermo-dynamic cycle of the heat-pump 3 so as to use the compressor for a limited period of time in unexpected ranges of pressure (i.e. pressures higher than the recommended one), in order to obtain in an efficient way the desired temperature necessary for pasteurizing the liquid.

In a preferred embodiment, the liquid contained in the liquid storage tank 4 is water, and the system according to the invention is arranged to pasteurize the water, i.e. to raise its temperature to a temperature T₂ of at least 70 °C, by exploiting the temperature of the ambient air, which is around 20-30 °C. The temperature of the ambient air can be also in the range of 15-25°C or above, without compromising the working of the system.

In one preferred embodiment, the temperature T₂ is maintained for a predetermined period, e.g. for few minutes. In one embodiment, the temperature T₂ is maintained for less than 5 minutes, e.g. for 2 minutes. The liquid storage tank 4 can comprise one or more temperature sensors (not illustrated) for sensing the temperature of the liquid and it can send this information to the control unit 2, for example to stop the process when the pasteurization is achieved. Other temperature sensors sensing the temperature outside the system, e.g. the air temperature, can communicate as well with the control unit 2.

Therefore, the heat pump 3 of the system according to the invention is arranged to
- works with a small power, i.e. a power less than 500 W;
- raises the temperature of the liquid in the liquid storage tank 4 to a temperature T₂ of at least 70 °C, and
- maintain the temperature T₂ for a predetermined period, e.g. for few minutes.

In a preferred embodiment, the liquid storage tank 4 has a substantially cylindrical or substantially prismatic shape. For example, in Figs. 1, 2, 3 and 5 it has a cylindrical shape and comprises a base 44, visible e.g. in Fig. 2, having a round shape.

The liquid storage tank 4 comprises also an opening 46, indicated in Fig. 2, through which the liquid can be directly poured in the tank 4. The liquid storage tank 4 is then "inlet free", i.e. it does not require any pressure for inserting the liquid in the tank 4.

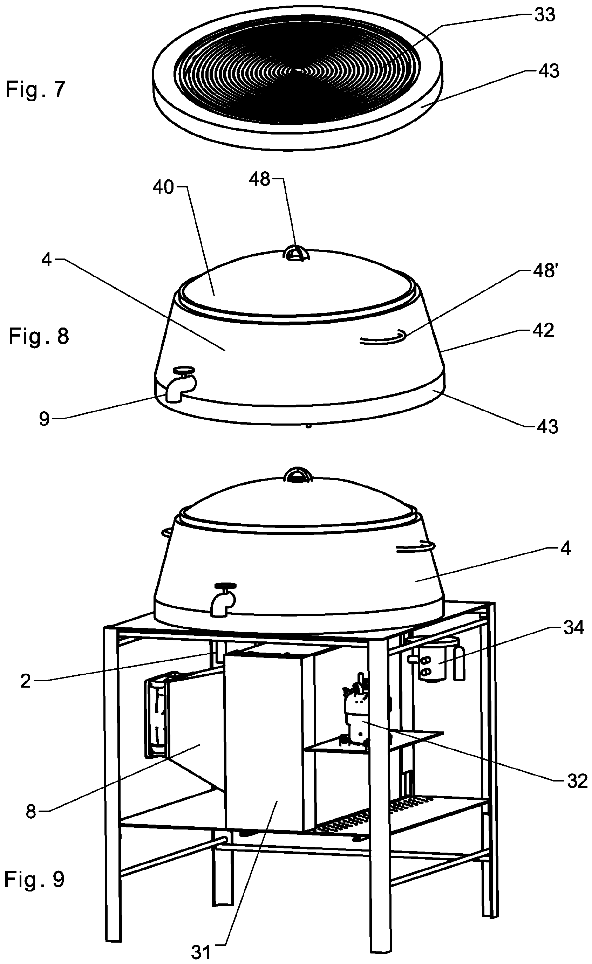

In another embodiment (illustrated in Fig. 8 to 10), the liquid storage tank 4 can comprise one or more outlets, e.g. taps, for allowing the exit of the liquid from the tank.

In the embodiment of Fig. 2, the liquid storage tank 4 comprises a hermetic cap 40 for hermetically closing the opening 46 of the liquid storage tank 4. In this way, the liquid in tank 4, e.g. water, once pasteurised avoids to be recontaminated or infected by external agents.

In a preferred embodiment, the dimensions of the liquid storage tank 4 are arranged so that the liquid storage tank 4 is portable, i.e. can be moved and/or transported by a person. For example and in a non-limiting way, it has a volume inferior to 50 I, e.g. 30 I or less, its height is less than 1 m, e.g. 50 cm, and the diameter of its base 44 is less than 50 cm, e.g. 40 cm.

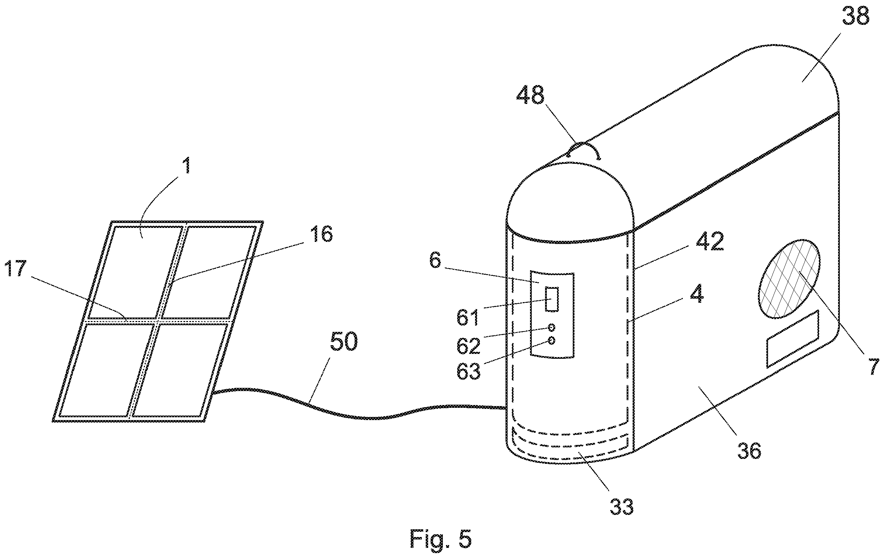

In one embodiment, the cap 40 of the liquid storage tank 4 comprises at least a handle 48, illustrated in Fig. 5, for facilitating the transport of the tank 4.

In one preferred embodiment, the off-grid renewable energy source 1 is portable as well. For example, it can be a photovoltaic panel having a main surface of few m², for example 1 m².

In one preferred embodiment, the off-grid renewable energy source 1 is used outdoor and the liquid storage tank 4 indoor, e.g. in a house. The off-grid renewable energy source 1 can be connected to the liquid storage tank 4 by one or more power cable 50, visible e.g. in Fig. 5. In a preferred embodiment, the length of these cables 50 is inferior to 25 m, e.g. 20 m or 15 m. The off-grid renewable energy source 1 can be easily moved indoor by one person, when the natural energy resource (e.g. the sun) is not available (e.g. at night). Of course, the direct contact between the liquid storage tank 4 and the condenser 33 allows to efficiently exploit the heat generate by the condenser 33.

In one preferred embodiment, the off-grid renewable energy source 1 is a flexible foldable and/or rolling and/or swivelling photovoltaic panel. For example, it can be folded along a line 16 and/or 17, illustrated in Fig. 5, and once folded it can be packed to the liquid storage tank 4, for example linked or inserted into its lateral wall so as to transport it together with the liquid storage tank 4.

In another embodiment, the off-grid renewable energy source 1 is a flexible foldable and/or rolling and/or swivelling photovoltaic panel which can be supported and/or embedded and/or inserted in and/or installed upon the container 36 containing the heat pump 3 and visible e.g. in Fig. 5 and/or in its cap 38, which will be discussed later.

In another embodiment, the off-grid renewable energy source 1 can be oriented, i.e. can change its orientation in an automatic and/or manual way, so as to use in a more efficient way the natural energy resources (e.g. the sun).

In a preferred embodiment, the condenser 33 of the heat pump 3 of the system 100 comprises a refrigerant conduit or pipe of a heat conductive material, e.g. copper or aluminium. According to an independent aspect of the invention, the refrigerant pipe can be arranged to be bent so that the area of the bent refrigerant conduit is substantially equal or inferior to the area of the base 44 of the liquid storage tank 4.

In a preferred embodiment, illustrated in Fig. 4, the refrigerant conduit is arranged to be bent so as to form a spiral. However other shapes, e.g. sinus-shape, etc., can be imagined.

In this way, the condenser 33 can be put near to or directly in contact with the base of the tank 4, so as to heat the temperature of the liquid contained in the tank, as illustrated in Figs. 3 and 5. In one preferred embodiment, the tank is made of heat conductive material, e.g. aluminium.

In the embodiment of Fig. 3, a container 42 receives the condenser 33 to be near to or put in contact with the base of the tank 4. The container 42 can be made of thermal insulation material and cover the whole outer surface of the tank and the condenser that touches the outer surface of the tank.

This kind of condenser 33 does not enter in contact with the liquid, so it is not necessary to protect it against e.g. the limestone.

In one embodiment, the refrigerant conduit or pipe of the condenser 33 forms a helical entering into contact with the vertical inner or outer surfaces of the tank. In this preferred embodiment, this helical can be combined with the spiral on the bottom of the tank. In other words, the shape of the condenser 33 is a spiral for the first part of the condenser in contact with the bottom internal or external surface of the tank 4, and the shape of the condenser is a helical spiral for the second part of the condenser in contact with the vertical internal or external surface of the tank.

Fig. 7 shows a perspective view of an embodiment of the condenser 33 according to the invention, placed in an insulation plate 43, i.e. a plate made by a thermal insulation material, that limits heat dispersion towards any other direction than the water tank outer surface. In particular, this plate 43 has a shape defining a receptacle in which the condenser 33 can be placed.

In one preferred embodiment, the receptacle or cavity arranged to receive the condenser 33 is defined by an edge having a thickness at least equal or higher that the thickness of the condenser 33: in such a way, this edge limits heat dispersion from the condenser 33 towards the other directions different from direction of the liquid tank 4, that will be placed on the condenser 33. Therefore, the heat from the condenser 33 is directed only to the liquid tank 4. This plate 43 allows then to improve the efficiency of the overall system.

In one particular embodiment, the condenser 33 comprises some maintaining means for maintaining the desired shape of the condenser 33 on the tank, e.g. the shape of spiral. Non-limitative example of such maintaining means comprise bars, in particular clamps made by the same material of the condenser, or welding or soldering connections between the spires of the condenser 33.

In the embodiment illustrated on Fig. 8, the container 42, made e.g. by a thermal insulation material, is placed on the surface defined by the condenser 33 and the plate 43, and a tank 4 is inserted in the container 42. The illustrated container 42 has one or more handles 48, for facilitating its handling and transporting. In the illustrated embodiment, the container 42 is portable. In the illustrated embodiment, the container 42 is mono-bloc. The cap 40 is used for closing the tank 4. The cap can be made by a thermal insulation material too and can comprise a handle 48 as well. A tap 9 allows the exit of the liquid from the tank 4.

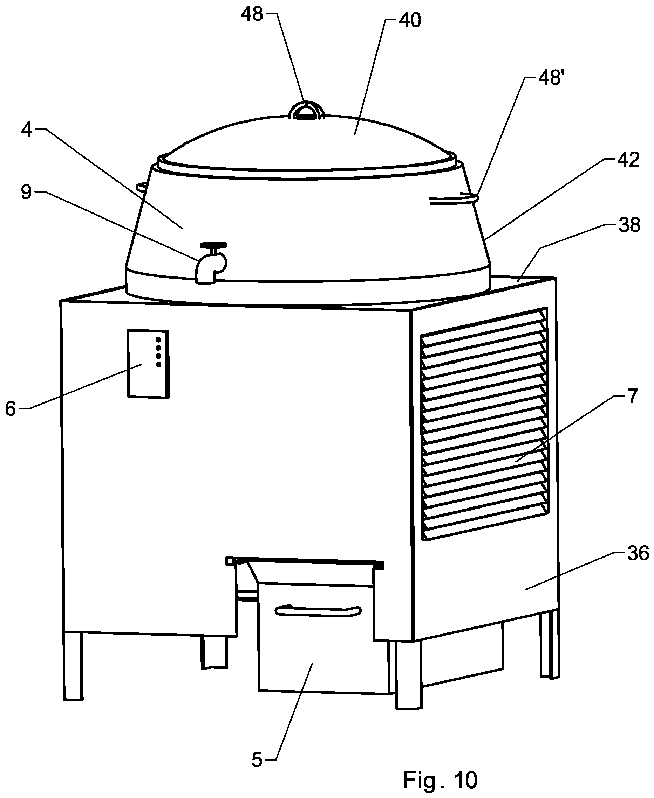

As illustrated in Fig. 9, the condenser and the tank are placed on the container 36, which in this example is a chassis box (here partially illustrated for clarity purposes, for a complete view see Fig. 10). This chassis box 36 comprises other components of the heat pump, i.e. the evaporator 31, the compressor 32 and the expansion valve 34. In the illustrated embodiment, the same container 36 contains also the control unit 2, a fan and an air manifold to the fan 8.

Fig. 10 shows a perspective view of the complete system which was just partially illustrated in Fig. 9. In this embodiment, the chassis box 36 includes a lower container to gather the air condensate 5. It includes vertical walls hiding or protecting the inner components of the heat pump and of the control unit. It comprises one or more openings 7, allowing the access of the air to the evaporator 31 within the chassis box 36. It comprises also a human-machine interface 6. The chassis box 36 can be placed indoor for providing hot water ready for consumption (e.g. for cooking, infusion, etc.) and/or cold water obtained through the refrigeration cycle.

In the illustrated embodiment, the chassis box 36, including the heat pump system and the container 42 of the condenser and the liquid storage tank, can have a total size of less than 1 m x 50 cm x 50 cm, e.g. 70 cm x 40 cm x 40 cm or less. It is portable, i.e. can be moved or transported by a person. It has some legs (four in the example), for improving the ergonomics of the system.

In the illustrated embodiment, the liquid storage tank 4 is a pot, used e.g. for cooking. Once the liquid has modified its temperature in particular to achieve pasteurization of the liquid, the cap 48 will guarantee the absence of recontamination of the water. In the embodiment wherein the condenser is external to the pot, as illustrated in Figs 7 to 10, the pot can be therefore easily removed from the rest of the heat pump 3, in particular from the chassis box 36 containing the heat pump 3.

In one embodiment, the part of the condenser directly in contact with the pot is planar or made planar, e.g. through soldering of condenser pipes, tinplating or welding a planar metal plate on the condenser.

In the embodiment in which the condenser is embodied in the base of the tank 4, or immersed in the liquid contained in the tank 4, this movability of the tank could be less easy, as it will be necessary to detach the condenser from the rest of the circuit of the heat pump. In this case, quick coupling joints can be applied allowing the easy and fast connection and disconnection of the condenser to the rest of the heat pump circuit when the water tank 4 is removed from the chassis box 36

In one embodiment, if the tank 4 comprises a tap 9, the tap 9 can be protected from external contact through mechanical design and haptic means to require the system to heat the tap 9 just before the liquid pass through it, so as to sterilize it.

The liquid storage tank 4 of Fig. 2 and 5 is made by a conductive material, e.g. aluminium, so as to transmit the heat from the condenser 33 to the liquid.

The container 42 of Fig. 5 is made by a material that is not necessarily a conductive material, e.g. it is made of plastic or in general of a thermal insulation material.

In the embodiment, the system according to the invention comprises an opening 7, allowing the entering of the air in the system so that its temperature can be exploited by the heat pump 3.

In the embodiment of Fig. 5, the heat pump 3 is contained in a chassis box 36. In one preferred embodiment, the chassis box 36 and container 42 constitute a single and mono-bloc container, arranged to receive both the liquid storage tank 4 and the heat pump 3. In another embodiment, they are two separated but linked containers. In the illustrated embodiment, the chassis box 36 comprises a cap 38.

In the embodiment of Fig. 4, the centre of the spiral is the point of the condenser 33 having the highest temperature T₁, e.g. 80-90 °C. When this condenser 33 is put in contact with the base under the liquid storage tank 4, it allows then a convective flow in the liquid, illustrated with dotted lines in Fig. 3, which allows to raise the temperature of the liquid in a more uniform way.

The described condenser 33 allows then to raise the efficiency of the heat pump 3 of the system 100.

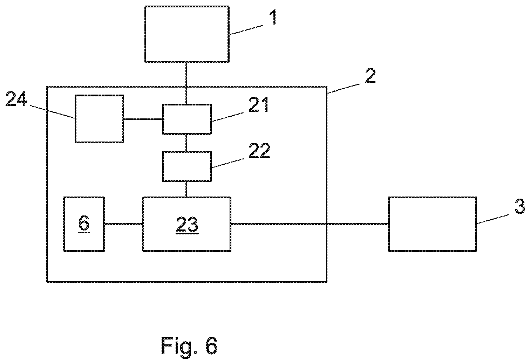

Fig. 6 shows a schematic view of another embodiment of a system according to the invention, comprising the off-grid renewable energy source 1, the control unit 2 and the heat pump 3. In this embodiment, the control unit 2 comprises a charge controller 21, connected to an inverter 22, which allows to generate an AC electric signal. In this case, the heat pump 3 is arranged to work with this AC electric signal.

In the embodiment of Fig. 6, the control unit 2 comprises a micro-controller 23, connected to the inverter 22, a human-machine interface 6 (an example of this interface being illustrated in Fig. 5), an electric storage unit 24 and the heat pump 3. The micro-controller 23 includes the electric drivers to operate the different electric engines that are present in the heat pump 3, e.g. for the compressor and the fan.

In one preferred embodiment, the control unit 2 is arranged to perform at least one of the following tasks:
- receive the electric power signal from the off-grid renewable energy source 1 and transmit at least a part of it to the heat pump 3
- receive the electric power signal from the off-grid renewable energy source 1 and charge the energy storage unit 24
- manage the energy stored in the energy storage unit 24
- manage the human-machine interface 6
- manage the signals from temperature sensors placed on the liquid storage tank and/or at the evaporator and/or on the off-grid renewable energy source
- measure the time the temperature of the liquid in the liquid storage tank remains above the pasteurization point
- stop the working of the system when the pasteurization cycle is completed
- stop the working of the system in case of over-heat and/or error.

In the embodiment of Fig. 6, the system according to the invention comprises the energy storage unit 24, for example a supercapacitor or a battery, which is arranged so as to store at least the energy necessary for completing a pasteurization cycle through the heat pump 3. In this case, if the natural energy resource (e.g. the sun) is not sufficient for generating the energy necessary to complete the cycle of the heat pump 3, the energy stored in the energy storage unit 24 can be used for completing the cycle without interruptions.

On the other hands, if the energy produced by the off-grid renewable energy source 1 exceeds the energy necessary to complete the cycle of the heat pump 3, the surplus of energy is sent by the control unit 2, in particular by its charge-controller 21, to this energy storage unit 24.

In one preferred embodiment, the control unit 2 comprises a printed circuit board (PCB), which can comprise the inverter 22, e.g. an integrated inverter.

In another embodiment, the PCB comprises the human-machine interface 6.

In another embodiment, the control unit 2 is connected to an external inverter and/or to an external human-machine interface 6.

In another embodiment, the control unit 2 comprises a connection to an external battery, e.g. a 12 V or a 24 V battery. This connection can be placed in the human-machine interface 6. This battery can be used in addition and/or instead of the energy storage unit 24 mentioned here above, so as to have a supplementary storage of energy to be used. An excess of storage energy can be used e.g. for charging mobile phones or low power lamps.

In another embodiment, the human-machine interface 6 comprises a connection for charging portable devices as e.g. a smartphone. In one preferred embodiment, the energy from the photovoltaic panel (1) and/or the energy stored in the supercapacitor or battery 24 is used for charging the portable devices, e.g. via a USB port.

In another embodiment, the control unit 2 comprises a connection to an electric grid.

In the embodiment of Fig. 5, the human-machine interface 6 comprises at least one haptic means 61, i.e. a means allowing to perform an action when it enters into contact with a user (e.g. a finger of the user) or an object as e.g. a stylus. Examples of haptic means comprise buttons, touch-screens, etc.

In one preferred embodiment, the haptic means 61 is a switch allowing to switch on and/or off the system 100.

In another embodiment, the human-machine interface 6 comprises one or more visual or audio elements 62, 63, e.g. LED of different colours, indicating that the system is ON and/or that the pasteurization cycle is completed and/or that the pasteurization cycle is ready to start and/or that there is an error or a problem to any component and/or the battery level. In another embodiment, the system according to the invention comprises security means, allowing e.g. to stop the system if the temperatures of the liquid T₁ and/or T₂ are higher than a threshold, e.g. higher than 80 °C.

According to an independent aspect of the invention, the heat pump 3 of the system according to the invention can be used also for cooling the liquid of the liquid storage tank 4. In this particular case, the system comprises a second liquid storage tank (not illustrated), the system being arranged to transfer the heat generated by cooling the liquid of the first liquid storage tank (for example from 70 °C to 15 °C) to the second liquid storage tank so as to pre-heating the liquid of the second liquid storage tank (for example to a temperature of 40 °C). The temperature of the liquid of the second liquid storage tank can then be raised to 70 °C in a more efficient and rapid way.

The present invention concerns also a method for pasteurizing a liquid contained in a liquid storage tank 4, the method comprising
- generate an electric power signal having a power equal or inferior to 500 W by using an off-grid renewable energy source 1, the off-grid renewable energy source 1 being portable
- completely power a heat pump 3 by using said power signal, the heat pump 3 being in a first container 36 and comprising a condenser 33 near to or directly in contact with a base 44 of the liquid storage tank 4, so as to pasteurize the liquid contained in the tank
- transport the liquid storage tank 4 by using a handle 48 of the liquid storage tank 4.

In one preferred embodiment, the liquid storage tank 4 is removed from the first container 36 after the pasteurization.

## Claims

1. A system (100) for pasteurizing a liquid in a liquid storage tank (4), the system comprising:
- an off-grid renewable energy source (1) arranged to generate an electric power signal having a power equal or inferior to 500 W, the off-grid renewable energy source (1) being portable,
- the liquid storage tank (4) being portable, being arranged to contain a volume of liquid inferior to 50 I, for example inferior to 30 I, and comprising a handle (48) for facilitating the transport of the liquid storage tank (4), for example after the pasteurization of said liquid,
- a first container (36) comprising a heat pump (3), said heat pump (3) being arranged to be completely powered by said off-grid renewable energy source (1),
- the heat pump (3) comprising a condenser (33) near to or directly in contact with a base (44) of the tank (4), the condenser (33) being arranged to heat the liquid contained in the tank (4) for pasteurizing said liquid.

2. The system of claim 1, an off-grid renewable energy source (1) comprising a photovoltaic panel, said photovoltaic panel being a flexible foldable and/or rolling and/or swivelling photovoltaic panel, said photovoltaic panel once folded being arranged to be connected or packed to the liquid storage tank (4), for example linked and/or inserted into its lateral wall and/or installed upon the first container (36) so as to transport it together with the liquid storage tank (4).

3. The system of one of claims 1 to 2, said liquid storage tank (4) being a pot arranged to be removed from the first container (36).

4. The system of one of claims 1 to 3, said first container (36) being portable and/or said heat pump (3) being portable.

5. The system of one of claims 1 to 4, said condenser (33) comprising a refrigerant conduit being arranged to be bent so that the area of the bent refrigerant conduit is substantially equal or inferior to the area of said base (44).

6. The system of previous claim, the refrigerant conduit being arranged to be bent so as to form a spiral.

7. The system of one of claims 5 to 6, the refrigerant conduit being arranged to be bent so as to form a helical entering into contact with a vertical inner or outer surfaces of the tank (4).

8. The system of one of claims 1 to 7, said condenser (33) being in contact with an inner or an outer surface of the tank (4), or being embodied in the base (44) of the tank, or being immersed on the liquid of the tank.

9. The system of one of claims 1 to 8, comprising a second container (42) comprising said liquid storage tank (4).

10. The system of one the previous claims, comprising a control unit (2) being arranged to connect the off-grid renewable energy source (1) with the heat pump (3) by transferring electric power from said off-grid renewable energy source (1) to said heat pump (3).

11. The system of the previous claim, said control unit (2) comprising an energy storage unit (24), for example a supercapacitor, arranged so as to store at least the energy necessary e.g. for heating said water to a temperature of at least 70 °C.

12. The system of one the claims 10 to 11, said control unit (2) comprising a connection for charging portable devices as e.g. a smartphone by using the energy from the off-grid renewable energy source.

13. The system of one the previous claims, the system being arranged to cool the liquid of the liquid storage tank (4), said liquid storage tank (4) being a first liquid storage tank, the system comprising a second liquid storage tank, the system being arranged to transfer the heat generated by cooling the liquid of the first liquid storage tank (4) to the second liquid storage tank so as to pre-heating the liquid of said second liquid storage tank.

14. The system of one of claims 10 to 13, the control unit (2) being arranged to perform at least one of the following tasks:
- receive the signal power from the off-grid renewable energy source (1) and transmit at least a part of it to the heat pump circuit (3)
- receive the signal power from the off-grid renewable energy source (1) and charge the energy storage unit (24)
- manage the energy stored in the energy storage unit (24)
- manage a human-machine interface (6)
- manage the signals from temperature sensors placed on the liquid storage tank (4) and/or at the evaporator (31) and/or on the off-grid renewable energy source (1)
- measure the time the temperature of the liquid in the liquid storage tank (4) remains above the pasteurization point (T2)
- stop the working of the system when the pasteurization cycle is completed
- stop the working of the system in case of over-heat and/or error.

15. A method for pasteurizing a liquid contained in a liquid storage tank (4), the method comprising
- generate an electric power signal having a power equal or inferior to 500 W by using an off-grid renewable energy source (1), the off-grid renewable energy source (1) being portable,
- completely power a heat pump (3) by using said power signal, the heat pump (3) being in a first container (36) and comprising a condenser (33) near to or directly in contact with a base (44) of the liquid storage tank (4), the condenser (33) being arranged to heat the liquid contained in the tank (4) so as to pasteurize said liquid,
- transport the liquid storage tank (4) by using a handle (48) of the liquid storage tank (4).

## Patentansprüche

1. System (100) zur Pasteurisierung einer Flüssigkeit in einem Flüssigkeitsspeichertank (4), wobei das System umfasst:
- eine netzferne erneuerbare Energiequelle (1), die zum Erzeugen eines elektrischen Leistungssignals mit einer Leistung gleich oder unter 500 W angeordnet ist; wobei die netzferne erneuerbare Energiequelle (1) tragbar ist,
- wobei der Flüssigkeitsspeichertank (4) tragbar ist und angeordnet ist, um ein Flüssigkeitsvolumen von weniger als 50 L, beispielsweise weniger als 30 L, zu enthalten, und mit einem Griff (48) ausgestattet zum Erleichtern des Transports des Flüssigkeitsspeichertanks (4), zum Beispiel nach dem Pasteurisieren der besagten Flüssigkeit,
- einem ersten Behälter (36) mit einer Wärmepumpe (3), wobei die besagte Wärmepumpe (3) so angeordnet ist, dass sie vollständig mit der besagten netzfernen erneuerbaren Energiequelle (1) gespeist wird,
- wobei die Wärmepumpe (3) einen Kondensator (33) aufweist, der sich in der Nähe oder direkt in Kontakt mit einer Basis (44) des Tanks (4) befindet, wobei der Kondensator (33) angeordnet ist, um die im Tank (4) enthaltene Flüssigkeit zu erhitzen, um die besagte Flüssigkeit zu pasteurisieren.

2. System gemäss Anspruch 1, wobei eine netzferne erneuerbare Energiequelle (1) eine Photovoltaikplatte umfasst, wobei die besagte Photovoltaikplatte eine flexible faltbare und/oder rollbare und/oder schwenkbare Photovoltaikplatte ist, wobei die besagte Photovoltaikplatte, sobald sie gefaltet ist, derart angeordnet ist, um mit dem Flüssigkeitsvorratsbehälter (4) verbunden oder verpackt zu werden, beispielsweise verbunden mit und/oder in seine seitliche Wand eingesetzt und/oder auf dem ersten Behälter (36) installiert, um ihn zusammen mit dem Flüssigkeitsvorratsbehälter (4) zu transportieren.

3. System gemäss einem der Ansprüche 1 bis 2, wobei der besagte Flüssigkeitsspeichertank (4) ein Topf ist, der derart angeordnet ist, um aus dem ersten Behälter (36) entfernt zu werden.

4. System gemäss einem der Ansprüche 1 bis 3, wobei der besagte erste Behälter (36) tragbar ist und/oder die besagte Wärmepumpe (3) tragbar ist.

5. System gemäss einem der Ansprüche 1 bis 4, wobei der besagte Kondensator (33) eine Kühlmittelleitung aufweist, die so angeordnet ist, um gebogen zu werden, so dass die Fläche der gekrümmten Kühlmittelleitung im Wesentlichen gleich der oder weniger als die Fläche der besagten Basis (44) ist.

6. System gemäss dem vorhergehenden Anspruch, wobei die Kühlmittelleitung so angeordnet ist, um gebogen zu werden, so dass sie eine Spirale bildet.

7. System gemäss einem der Ansprüche 5 bis 6, wobei die Kühlmittelleitung so angeordnet ist, um gebogen zu werden, dass sie eine Wendel bildet, die in Kontakt mit einer vertikalen inneren oder äusseren Oberfläche des Tanks (4) kommt.

8. System gemäss einem der Ansprüche 1 bis 7, wobei der besagte Kondensator (33) mit einer inneren oder einer äusseren Oberfläche des Tanks (4) in Kontakt steht, oder in der Basis (44) des Tanks eingebaut ist, oder in die Flüssigkeit des Tanks eingetaucht ist.

9. System gemäss einem der Ansprüche 1 bis 8, mit einem zweiten Behälter (42), welcher den besagten Flüssigkeitsspeichertank (4) umfasst.

10. System gemäss einem der vorhergehenden Ansprüche, mit einer Steuereinheit (2), die so angeordnet ist, um die netzferne erneuerbare Energiequelle (1) mit der Wärmepumpe (3) zu verbinden, indem elektrische Energie von der besagten netzfernen erneuerbaren Energiequelle (1) an die besagte Wärmepumpe (3) übertragen wird.

11. System gemäss dem vorhergehenden Anspruch, wobei die besagte Steuereinheit (2) eine Energiespeichereinheit (24) umfasst, beispielsweise einen Superkondensator, so angeordnet, um mindestens die notwendige Energie zu speichern, beispielsweise zum Erwärmen des besagten Wassers auf eine Temperatur von mindestens 70 °C.

12. System gemäss einem der Ansprüche 10 bis 11, wobei die besagte Steuereinheit (2) eine Verbindung zum Laden von tragbaren Geräten wie beispielsweise eines Smartphones durch Nutzung der Energie aus der netzfernen erneuerbaren Energiequelle umfasst.

13. System gemäss einem der vorhergehenden Ansprüche, wobei das System zum Kühlen der Flüssigkeit des Flüssigkeitsspeichertanks (4) eingerichtet ist, wobei der besagte Flüssigkeitsspeichertank (4) ein erster Flüssigkeitsspeichertank ist, wobei das System einen zweiten Flüssigkeitsspeichertank umfasst, wobei das System angeordnet ist, um die durch Kühlen der Flüssigkeit des ersten Flüssigkeitsspeichertanks (4) erzeugte Wärme an den zweiten Flüssigkeitsspeichertank zu übertragen, um so die Flüssigkeit des besagten zweiten Flüssigkeitsspeichertanks vorzuwärmen.

14. System gemäss einem der Ansprüche 10 bis 13, wobei die Steuereinheit (2) angeordnet ist, um mindestens eine der folgenden Aufgaben auszuführen:
- Empfangen der Signalleistung von der netzfernen erneuerbaren Energiequelle (1) und Übertragen mindestens eines Teils davon an den Wärmepumpenkreislauf (3),
- Empfangen der Signalleistung von der netzfernen erneuerbaren Energiequelle (1) und Aufladen der Energiespeichereinheit (24)
- Verwaltung der im Energiespeicher (24) gespeicherten Energie
- Verwaltung einer Mensch-Maschine-Schnittstelle (6)
- Verwaltung der Signale von Temperatursensoren, die am Flüssigkeitsvorratsbehälter (4) und/oder am Verdampfer (31) und/oder an der netzfernen erneuerbaren Energiequelle (1) angeordnet sind
- Messen der Zeit, während der die Temperatur der Flüssigkeit im Flüssigkeitsvorratsbehälter (4) über dem Pasteurisierungspunkt (T2) bleibt
- Stoppen des Betriebs des Systems, wenn der Pasteurisierungszyklus abgeschlossen ist
- Stoppen des Betriebs des Systems bei Überhitzung und/oder Fehler.

15. Verfahren zum Pasteurisieren einer Flüssigkeit, die in einem Flüssigkeitsspeichertank (4) enthalten ist, wobei das Verfahren umfasst:
- Erzeugen eines elektrischen Leistungssignals mit einer Leistung gleich oder unter 500W unter Verwendung einer netzfernen erneuerbaren Energiequelle (1), wobei die netzferne erneuerbare Energiequelle (1) tragbar ist,
- vollständige Speisung einer Wärmepumpe (3) unter Verwendung des besagten Leistungssignals, wobei sich die Wärmepumpe (3) in einem ersten Behälter (36) befindet und einen Kondensator (33) aufweist, der sich in der Nähe oder direkt in Kontakt mit einer Basis (44) des Flüssigkeitsspeichertanks (4) befindet, wobei der Kondensator (33) angeordnet ist, um die im Tank (4) enthaltene Flüssigkeit zu erhitzen, um die besagte Flüssigkeit zu pasteurisieren,
- Transportieren des Flüssigkeitsspeichertanks (4) unter Verwendung eines Griffs (48)) des Flüssigkeitsvorratsbehälters (4).

## Revendications

1. Un système (100) pour pasteuriser un liquide dans un réservoir de stockage de liquide (4), le système comprenant :
- une source d'énergie renouvelable hors-réseau (1) agencée pour générer un signal de puissance électrique ayant une puissance égale ou inférieure à 500 W, la source d'énergie renouvelable hors-réseau (1) étant portable,
- le réservoir de stockage de liquide (4) étant portable, étant arrangé pour contenir un volume de liquide inférieur à 50 l, par exemple inférieur à 30 l, et comprenant une poignée (48) pour faciliter le transport du réservoir de stockage de liquide (4), par exemple après la pasteurisation dudit liquide,
- un premier récipient (36) comprenant une pompe à chaleur (3), ladite pompe à chaleur (3) étant agencée pour être complètement alimentée par ladite source d'énergie renouvelable hors-réseau (1),
- la pompe à chaleur (3) comprenant un condenseur (33) proche ou directement en contact avec un fond (44) du réservoir (4), le condenseur (33) étant agencé pour chauffer le liquide contenu dans le réservoir (4) pour pasteuriser ledit liquide.

2. Système selon la revendication 1, une source d'énergie renouvelable hors-réseau (1) comprenant un panneau photovoltaïque, ledit panneau photovoltaïque étant un panneau photovoltaïque flexible pliable et/ou roulant et/ou pivotant, ledit panneau photovoltaïque une fois plié étant arrangé pour être relié ou emballé au réservoir de stockage de liquide (4), par exemple lié et/ou inséré dans sa paroi latérale et/ou installé sur le premier récipient (36) de manière à le transporter avec le réservoir de stockage de liquide (4).

3. Système selon l'une des revendications 1 à 2, ledit réservoir de stockage de liquide (4) étant un pot conçu pour être retiré du premier récipient (36).

4. Système selon l'une des revendications 1 à 3, ledit premier conteneur (36) étant portable et/ou ladite pompe à chaleur (3) étant portable.

5. Système selon l'une des revendications 1 à 4, ledit condenseur (33) comprenant un conduit réfrigérant étant agencé pour être plié de sorte que la surface du conduit de réfrigérant plié soit sensiblement égale ou inférieure à la surface de ladite base (44).

6. Système selon la revendication précédente, le conduit réfrigérant étant conçu pour être plié de manière à former une spirale.

7. Système selon l'une des revendications 5 à 6, le conduit réfrigérant étant agencé pour être plié de manière à former une hélice entrant en contact avec une des surfaces verticales intérieure ou extérieure du réservoir (4).

8. Système selon l'une des revendications 1 à 7, ledit condenseur (33) étant en contact avec une surface interne ou externe du réservoir (4), ou étant incorporé dans la base (44) du réservoir, ou immergé sur le liquide du réservoir.

9. Système selon l'une des revendications 1 à 8, comprenant un deuxième récipient (42) comprenant ledit réservoir de stockage de liquide (4).

10. Système selon l'une des revendications précédentes, comprenant une unité de commande (2) étant agencée pour connecter la source d'énergie renouvelable hors-réseau (1) à la pompe à chaleur (3) en transférant de la puissance électrique à partir de ladite source d'énergie renouvelable hors-réseau. (1) à ladite pompe à chaleur (3).

11. Système selon la revendication précédente, ladite unité de commande (2) comprenant une unité de stockage d'énergie (24), par exemple un super-condensateur, agencée de manière à stocker au moins l'énergie nécessaire, par exemple pour chauffer ladite eau à une température d'au moins 70 ° C.

12. Système selon l'une des revendications 10 à 11, ladite unité de commande (2) comprenant une connexion pour charger des dispositifs portables, comme par exemple un smartphone en utilisant l'énergie de la source d'énergie renouvelable hors-réseau.

13. Système selon l'une des revendications précédentes, le système étant agencé pour refroidir le liquide du réservoir de stockage de liquide (4), ledit réservoir de stockage de liquide (4) étant un premier réservoir de stockage de liquide, le système comprenant un second réservoir de stockage de liquide, le système étant agencé pour transférer la chaleur générée par le refroidissement du liquide du premier réservoir de stockage de liquide (4) vers le deuxième réservoir de stockage de liquide de manière à préchauffer le liquide dudit deuxième réservoir de stockage de liquide.

14. Système selon l'une des revendications 10 à 13, l'unité de contrôle (2) étant agencée pour effectuer au moins l'une des tâches suivantes :
- recevoir le signal de puissance de la source d'énergie renouvelable hors-réseau (1) et en transmettre au moins une partie au circuit de pompe à chaleur (3)
- recevoir le signal de puissance de la source d'énergie renouvelable hors-réseau (1) et charger l'unité de stockage d'énergie (24)
- gérer l'énergie stockée dans l'unité de stockage d'énergie (24)
- gérer une interface homme-machine (6)
- gérer les signaux des capteurs de température placés sur le réservoir de stockage de liquide (4) et/ou sur l'évaporateur (31) et/ou sur la source d'énergie renouvelable hors-réseau (1)
- mesurer le temps pendant lequel la température du liquide dans le réservoir de stockage de liquide (4) reste au-dessus du point de pasteurisation (T2)
- arrêter le fonctionnement du système lorsque le cycle de pasteurisation est terminé
- arrêter le fonctionnement du système en cas de surchauffe et/ou d'erreur.

15. Procédé de pasteurisation d'un liquide contenu dans un réservoir de stockage de liquide (4), le procédé comprenant
- générer un signal de puissance électrique ayant une puissance égale ou inférieure à 500 W en utilisant une source d'énergie renouvelable hors-réseau (1), la source d'énergie renouvelable hors-réseau (1) étant portable,
- alimenter complètement une pompe à chaleur (3) en utilisant ledit signal de puissance, la pompe à chaleur (3) se trouvant dans un premier récipient (36) et comprenant un condenseur (33) à proximité de ou directement en contact avec une base (44) du réservoir de liquide (4), le condenseur (33) étant agencé pour chauffer le liquide contenu dans le réservoir (4) afin de pasteuriser ledit liquide,
- transporter le réservoir de liquide (4) en utilisant une poignée (48) du réservoir de liquide (4).
